# EUROPEAN PATENT APPLICATION

(11) **EP 1 793 309 A1**
(43) Date of publication of application: **06.06.2007**
(21) Application number: 06124304.4
(22) Date of filing: 17.11.2006
(51) Int. Cl.: G06F 3/048, H04N 5/445

(54) **Display apparatus and searching method**

(30) Priority: 03.12.2005 KR 20050117284
(71) Applicant: Samsung Electronics Co., Ltd., Suwon-si 442-742 Gyeonggi-Do (KR)
(72) Inventor: Kwon, Yong-hwan, Seongnam-si Gyeonggi-do (KR); Yim, Jin-ho, Paldal-gu Suwon-si Gyeonggi-do (KR); Kim, Sung-woo, Seongnam-si (KR); Lee, Keum-koo, Gangnam-gu Seoul (KR); Seong, Ki-ae, Seoul (KR)
(74) Representative: Robinson, Ian Michael

(57) **Abstract**

A display apparatus and a search method are provided. The display apparatus includes a user selection unit (80) which adjusts a search speed and a search function for searching contents information; a signal processor unit (30) which processes a signal to be displayed on a display unit (40); and a controller (70) which controls the signal processor unit (30) such that when the search function is selected, at least one of the contents information is displayed in a region of the display unit (40), and the number of contents information is adjusted based on the search speed. The method includes receiving a selection signal for selecting a search function for searching a plurality of contents information (51a); adjusting a search speed of the contents information; displaying at least one of the contents information; and adjusting a number of the displayed contents information based on the search speed when the search function is selected.

## Description

Apparatuses and methods consistent with the present invention relate to a display apparatus and a searching method thereof, more particularly, to a display apparatus and a searching method thereof, in which a screen displayed on a display unit when contents information is retrieved is improved.

In recent years, a lot of contents information is provided in a display apparatus, so when a user tries to display or reproduce desired contents information on a display unit, he or she feels some difficulty in searching desired contents information. For example, in the case where the display apparatus is a television, the number of channels has increased due to digital broadcasting, and the user may feel inconvenience in searching for a desired channel among a lot of channels. Moreover, in the case where photos, moving pictures and document files or the like are stored in the display apparatus, it is inconvenient for the user to find a desired file because there are a lot of files to be retrieved as the storage capacity increases.

Accordingly, in a related art display apparatus, when a user tries to see contents information one by one while searching the information, for the user's convenience, it is desired to improve a screen displayed on a display unit while searching the contents information.

According to the present invention there is provided an apparatus and method as set forth in the appended claims. Preferred features of the invention will be apparent from the dependent claims, and the description which follows.

An aspect of the present invention provides a display apparatus and a searching method thereof in which a screen displayed on a display unit is improved when a user searches contents information.

These and other aspects of the present invention can be achieved by providing a display apparatus, comprising a user selection unit which adjusts a search speed of a plurality of contents information and a search function for searching the plurality of contents information; a signal processor unit which processes a signal to be displayed as an image on a display unit; and a controller which controls the signal processor unit such that when the search function is selected, at least one of the plurality of contents information is displayed in a region of the display unit, and a number of contents information displayed on the display unit is adjusted based on the search speed.

According to an aspect of the invention, the controller controls the signal processor unit such that at least one of a display position and a display size of each of the plurality of contents information is adjusted based on the search speed.

According to an aspect of the invention, the controller controls the signal processor unit such that the number of the contents information displayed on the display unit is increased and the display size of the contents information is reduced as the search speed increases.

According to an aspect of the invention, the controller controls the signal processor unit such that the plurality of contents information is sequentially arranged in a certain form.

According to an aspect of the invention, as the search speed increases, the controller increases the number of sequentially arranged contents information to be displayed on the display unit based on a location of the retrieved contents information.

According to an aspect of the invention, the controller controls the signal processor unit such that the certain form is fully displayed on the display unit when the search speed is greater than a threshold speed.

According to an aspect of the invention, the controller sequentially arranges the plurality of contents information in a closed-loop shape.

According to an aspect of the invention, the controller controls the signal processor unit such that the plurality of sequentially arranged contents information is displayed in perspective.

According to an aspect of the invention, the controller controls the signal processor unit such that the plurality of sequentially arranged contents According to an aspect of the invention, the contents information is displayed as faces, and the controller controls the signal processor unit in such a manner that the face is displayed in perspective depending on a location on the display unit when the search function is selected.

According to an aspect of the invention, the contents information is sequentially retrieved through the operation of the user selection unit, and the controller controls the signal processor unit such that the sequentially retrieved contents information is displayed distinguishably from the other contents information.

According to an aspect of the invention, the controller controls the signal processor unit such that the sequentially retrieved contents information is positioned in a region designated for the plurality of sequentially arranged contents information.

According to an aspect of the invention, the controller controls the signal processor unit such that a remainder of the retrieved contents information is displayed to be overlapped with the other contents information.

According to an aspect of the invention, the controller controls the signal processor unit such that initially retrieved contents information is displayed distinguishably from the other contents information.

According to an aspect of the invention, the controller determines that the search function is selected when the search speed is greater than a reference speed.

According to an aspect of the invention, the display apparatus further comprises a tuner to be tuned to a broadcast signal corresponding to a channel of a plurality of channels, wherein the contents information comprises image information based on the broadcast signal corresponding to each channel of the plurality of channels.

According to an aspect of the invention, the image information comprises a basic image corresponding to each channel of the plurality of channels through which the broadcast signal is received, and the display apparatus further comprises a storage unit for storing the basic image.

According to an aspect of the invention, the retrieved image information further comprises a tuning image corresponding to a video signal being selected in the tuner.

According to an aspect of the invention, the signal processor unit processes channel information corresponding to a channel to be displayed on the display unit, and the controller controls the signal processor unit such that the channel information corresponding to the retrieved channel is displayed in a region other than the region where the image information is displayed on the display.

According to an aspect of the invention, the display apparatus further comprising a storage unit for storing file data, wherein the controller controls the signal processor unit such that the contents information based on the file data stored in the storage unit is displayed on the display unit.

Another aspect of the present invention can be achieved by providing a search method of contents information comprising receiving a selection signal for selecting a search function for searching a plurality of contents information; adjusting a search speed of the contents information; displaying at least one of the contents information; and adjusting a number of the displayed contents information based on the search speed when the search function is selected.

According to an aspect of the invention, the search method further comprises adjusting at least one of a display position and a display size of contents information depending on the search speed.

According to an aspect of the invention, the adjusting the number of the displayed contents information comprises increasing the number of the displayed contents information as the search speed increases, and the adjusting the display size comprises adjusting the display size of the contents information to be smaller as the search speed increases.

According to an aspect of the invention, the search method further comprises sequentially arranging the plurality of contents information in a certain form.

According to an aspect of the invention, the sequentially arranging the plurality of contents information comprises increasing a number of sequentially arranged contents information which will be displayed with respect to a location of retrieved contents information as the search speed increases.

According to an aspect of the invention, the sequentially arranging the plurality of contents information comprises displaying a whole of the certain form when the search speed is greater than a threshold speed.

According to an aspect of the invention, the sequentially arranging the plurality of contents information in a certain form comprises sequentially arranging a plurality of contents information in a closed-loop shape.

According to an aspect of the invention, the sequentially arranging the plurality of contents information in a certain form comprises displaying the plurality of sequentially arranged contents information in perspective.

According to an aspect of the invention, the selecting the search function comprises sequentially searching the contents information.

According to an aspect of the invention, the selecting the search function comprises sequentially searching the contents information, and the search method further comprises displaying retrieved contents information to be displayed distinguishably from other contents information.

According to an aspect of the invention, the displaying the retrieved contents information distinguishably comprises displaying the retrieved contents information to be positioned in a certain region of the plurality of sequentially arranged contents information.

According to an aspect of the invention, the displaying the retrieved contents information distinguishably comprises displaying a remainder of the contents information overlapped with the other contents information, respectively.

According to an aspect of the invention, the selecting the search function comprises selecting the search function when the search speed is greater than a reference speed.

According to an aspect of the invention, the search method further comprises tuning the broadcast signal corresponding to a channel of a plurality of channels, wherein the contents information comprises image information based on the broadcast signal corresponding to each channel of the plurality of channels.

According to an aspect of the invention, the image information comprises a basic image corresponding to each channel of which the broadcast signal is received, and the search method comprises storing the basic image.

According to an aspect of the invention, the search method further comprises displaying the channel information corresponding to a retrieved channel in a region other than a region where the image information is displayed.

According to an aspect of the invention, the search method further comprises storing file data, wherein the contents information comprises information about the stored file data.

Still another aspect of the present invention can be achieved by providing a display apparatus, comprising a channel selection unit which selects a channel search; a tuner which is tuned to a broadcast signal corresponding to each channel of a plurality of channels; a signal processor unit which processes a signal to be displayed as an image on a display unit; and a controller which controls the signal processor unit such that a plurality of contents information corresponding to each tunable channel of the plurality of channels in the tuner is sequentially arranged and displayed on the display unit when the channel search is selected, and the contents information corresponding to a retrieved channel is displayed distinguishably from other contents information.

According to an aspect of the invention, the controller controls the signal processor unit such that the plurality of contents information is sequentially arranged in a closed-loop shape.

According to an aspect of the invention, the controller controls the signal processor unit such that the channel information corresponding to the retrieved channel is displayed in a region other than a region where the contents information is displayed.

The above and other aspects of the prevent invention will become apparent and more readily appreciated from the following description of exemplary embodiments, taken in conjunction with the accompany drawings, in which:
Figure 1 is a control block diagram of a display apparatus according to a first embodiment of the present invention;
Figure 2 is a control block diagram of a display apparatus according to a second embodiment of the present invention;
Figures 3A through 3D are views illustrating a display state of contents information which is displayed on a display unit and changed depending on search speed;
Figures 4A through 4C are views illustrating a state where the location of retrieved contents information is changed when the retrieved contents information is changed; and
Figure 5 is a control flowchart of a display apparatus according to an exemplary embodiment of the present invention.

Reference will now be made in detail to exemplary embodiments of the present invention, examples of which are illustrated in the accompanying drawings, wherein like reference numerals refer to like elements throughout. Further, repetitive descriptions will be avoided as necessary.

The present invention relates to a display apparatus, and the scope of display apparatus will not be restricted if certain contents information can be retrieved.

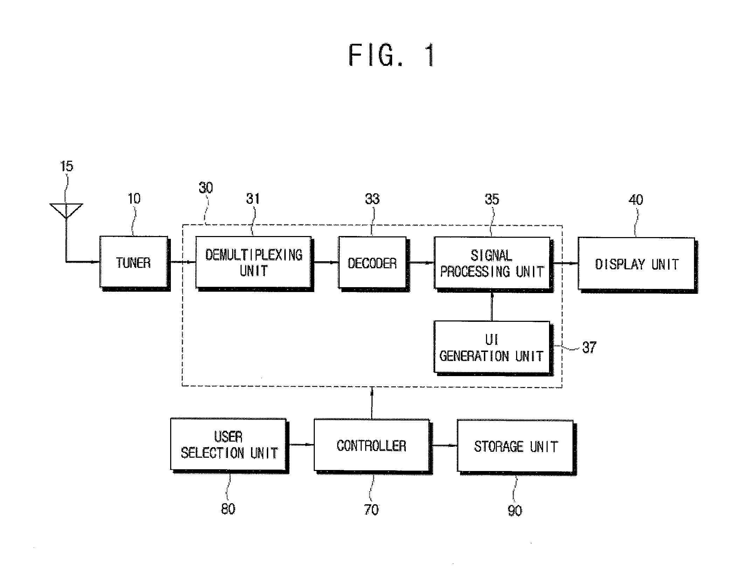

Figure 1 illustrates an exemplary embodiment in which a display apparatus according to the present invention is a television. As illustrated in Figure 1, a display apparatus according to an exemplary embodiment of the present invention includes a display unit 40, a signal processing unit 30, a user selection unit 80, and a controller 70 for controlling these units. Furthermore, the display apparatus according to the present invention may further include a signal receiving unit 15 for receiving a broadcast signal from external sources such as broadcasting stations, and a tuner 10 for being tuned to a broadcast signal corresponding to a channel.

The user selection unit 80 outputs a key signal to the controller 70 (to be described later) according to a user's manipulation. The key signal may be predetermined. The user selection unit 80 is provided for a user to input or select a function, and can be implemented in a variety of ways with a plurality of input keys, a button, a remote controller, a mouse and the like. The function may be predetermined. Here, the user can select a search function for searching contents information by using the user selection unit 80 and control the search speed of contents information.

Here, the display unit 40 receives a video signal from the signal processing unit 30 (to be described later) to display an image on the screen. The display unit 40 includes a display module (not shown) for displaying an image and a display module driving unit (not shown) for processing the input video signal to display an image on the display module.

The display module according to an exemplary embodiment of the present invention denotes various forms of display modules, such as a Cathode Ray Tube (CRT), Digital Light Processing (DLP), an Liquid Crystal Display (LCD), a Plasma Display Panel (PDP), or similar display modules. Here, in the case where the display module is the DLP, the module driving unit will include an optical engine. In case where the display module is the LCD, the module driving unit will include a printed circuit board for converting a video signal input from the signal processing unit 30 into data and gate signals. Similarly, each display unit 40 may have the configuration of a module driving unit which corresponds to the form of each display module.

The tuner 10 selects a channel according to a selected control signal from the controller 70 (to be described later) among a plurality of channels received through the signal receiving unit 15 such as an antenna. The channel may be predetermined.

The signal processing unit 30 processes a video signal so as to display the video signal on the display unit 40, and outputs the video signal to the display unit 40. Here, the signal processing unit 30 may include a user interface (UI) generation unit 37 and a signal processing unit 35. Further, the signal processing unit 30 may include a demultiplexing unit 31 and a decoder 33 in the case where the broadcasting signal is a digital signal.

When the demultiplexing unit 31 receives the selected digital broadcasting signal from the tuner 10, the demultiplexing unit 31 divides the digital broadcasting signal input in a transport stream form into video, audio and data signals, and the decoder 33 decodes each signal divided by the demultiplexing unit 31 and outputs the decoded signal to the signal processing unit 35.

The UI generating unit 37 generates an interface screen to output to the signal processing unit 35. The interface screen may be predetermined. Here, the UI generating unit 37 can be implemented in a variety of ways such as through an on screen display (OSD) generating unit for generating the interface screen, a part of a graphics card, a 3D graphic engine for processing an image in three dimensions, a corresponding application program, or the like.

Further, the UI generating unit 37 generates a screen including contents information in accordance with the control of the controller 70 (to be described later).

Here, the UI generating unit 37 can give perspective to the contents information to be displayed on the display unit 40. At this time, the UI generating unit 37 processes the contents information in a two-dimensional coordinate, but allows the user to feel 3-dimension by varying the display state depending on distance.

Also, the UI generating unit 37 includes a 3D engine to perform a process of modeling a geometric shape of the contents information by the use of a three-dimensional coordinate system, a process of projecting a three-dimensional shape on a two-dimensional plane, and a process of rendering the color and the shade of a generated three-dimensional shape. In the rendering process, three-dimensional textures such as shadow and color changes are added to give realism to a graphic. Here, the rendering process may include hidden surface removal, shading, texture mapping or the like. In such a way, the UI generating unit 37 includes the 3D engine to calculate each display state of the contents information into a three-dimensional coordinate and display the contents information in perspective on the display unit 40, thereby providing a user with a more improved UI as compared with that rendered with two-dimensional coordinates.

The signal processing unit 35 may bypass an interface screen generated by the UI generating unit 37, process the interface screen to be output to the display unit 40, or combine with a screen separately processed in the signal processing unit 35 to be output to the display unit 40.

When the search function is selected through the signal processing unit 35, the controller 70 can display at least one of the contents information in a portion of the display unit 40. At this time, the controller 70 determines the search speed of the contents information, and controls the signal processing unit 30 to adjust a number of the contents information displayed on the display unit 40 according to the determined search speed.

Here, when a key signal to inform that a function of search has been selected is received, or when it is determined that the search speed of the contents information is faster than a reference speed, the controller 70 may determine that the search function is selected. Note that the reference speed may be preset. Further, the search speed denotes the speed of which the contents information is retrieved. Here, the search speed can be changed according to how many times the search keys are selected within a set period of time, or according to how long the pressed time when a sequential search key for sequential search (e.g., channel up/down keys or the like) is pressed within a period of time, which may be predetermined. The set period of time and the sequential search may each also be predetermined.

In the case where a display apparatus according to an embodiment of the present invention is a television, contents information can be provided to correspond to each channel. In other words, channels are retrieved through the user selection unit 80, and the contents information corresponding to the channels can be displayed on the display unit 40. Here, the contents information may include image information corresponding to each channel. Specifically, the image information may include at least one of a basic image corresponding to each channel for which a broadcast signal is received and an image corresponding to a video signal selected by the tuner 10. Here, the basic image is an image corresponding to each channel. For example, the basic image can be obtained by capturing an image based on the video signal selected by the tuner 10.

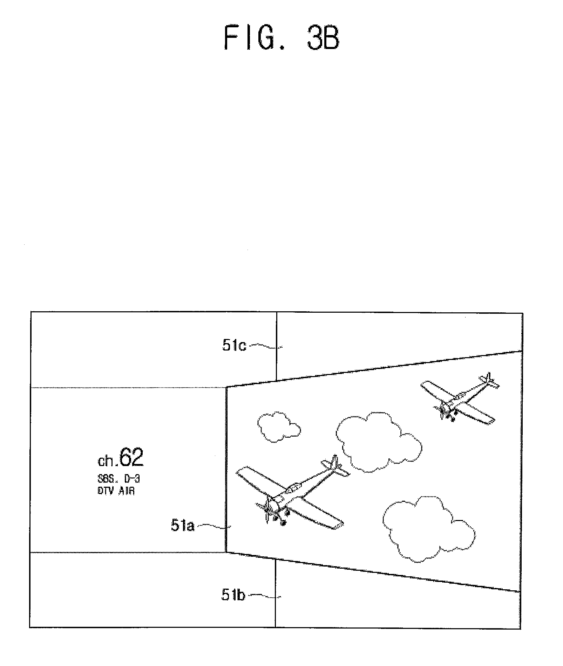

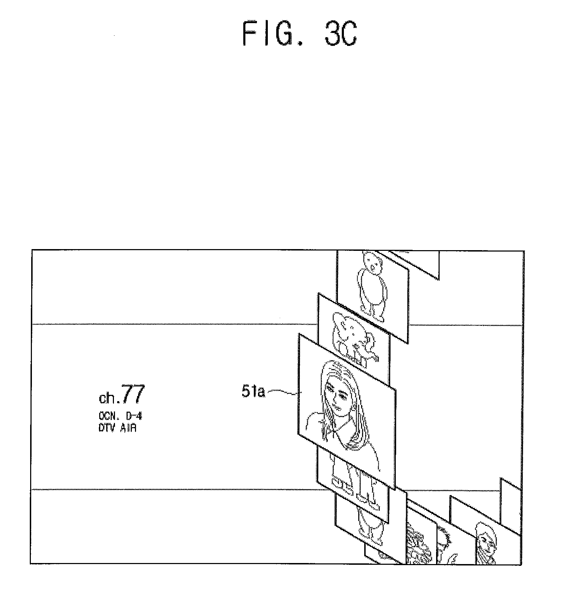

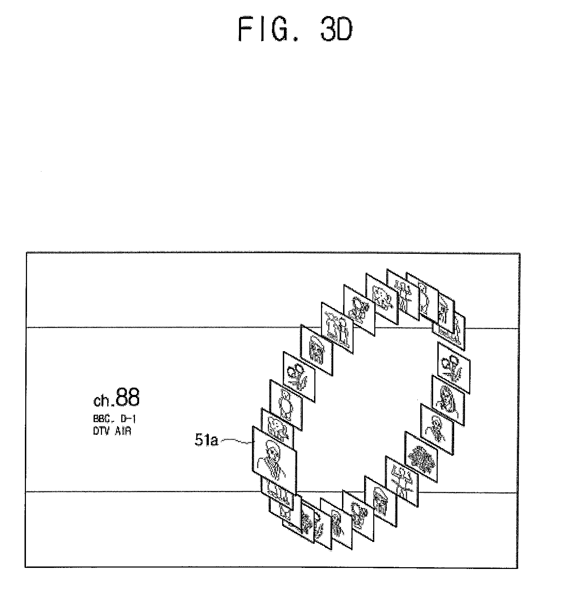

For example, a channel corresponding to retrieved contents information (hereinafter, refer to reference numeral 51a of Figure 3b) is a currently tuned channel, and the contents information may be a video signal corresponding to the currently tuned channel. In this case, the retrieved contents information 51a may be an image corresponding to the currently tuned channel. Moreover, a previously retrieved contents information 51a may be an image obtained by capturing the image corresponding to the previously tuned channel. The contents information has been retrieved in sequence of a channel number 1, a channel number 2, ... and a channel number 15. Then, a channel number 16 is currently retrieved. Later, the channel number 17 will be retrieved.

At this time, an image corresponding to the current channel number 16 is displayed on the display unit 40 as the retrieved contents information 51a, and the rest of the contents information may be stored as the basic images in the storage unit 90. However, the image corresponding to the channel number 16 may be the basic image, too.

Here, it is described that the contents information may be information corresponding to a channel, but the contents information is not be restricted to this. Moreover, the contents information may be data information stored in the storage unit 90.

In the case where the search speed is slower than a threshold speed (which may be preset), the currently tuned image will be displayed on the display unit 40 as the retrieved contents information 51a. On the other hand, in the case where the search speed is faster than the threshold speed, the basic image stored in the storage unit 90 will be displayed as the contents information.

In the meantime, the controller 70 can control the signal processing unit 30 to adjust at least one of the display position and the display size for each of the contents information as well as the number of contents information to be displayed, according to the search speed.

Specifically, the controller 70 can increase the number of contents information to be displayed on the display unit 40 as the search speed of the contents information increases. Alternatively, as the search speed of the contents information increases, the display size of the contents information may be controlled to become smaller, and also the display position of the contents information may be changed.

For example, the tuner 10 can select channel numbers of 1 through 100, and the contents information may correspond to the image information corresponding to each channel.

At this time, when the channel up key of the channel up/down keys as a channel search key is continuously pressed by the user in the user selection unit 80, the image information corresponding to the channel number 1 will be retrieved, then the image information corresponding to channel numbers 2, 3, ... 100 will be sequentially retrieved. When the channel-up key is still selected, the image information corresponding to the channel number 1 can be retrieved again.

When the user selects the channel up key for the first time, only the image information corresponding to the channel number 1 will be displayed on the display unit 40. Sequentially, as the search speed increases, the image information corresponding to the other channels can be displayed on the display unit 40. Alternatively, when the user selects the channel up key for the first time, the image information corresponding to channel number 1 and other channel numbers may be displayed on the display unit 40.

The controller 70 according to an exemplary embodiment of the present invention can control the signal processing unit 30 in such a manner that a plurality of contents information is sequentially arranged. Here, the controller 70 can determine a form of the contents information to be sequentially arranged, and control the signal processing unit 30 to adjust a region of the display unit 40 according to the search speed, in which the plurality of sequentially arranged contents information is displayed with a certain form. The certain form may be predetermined. The controller 70 can implement a variety of forms in which the plurality of contents information is arranged. For example, the form in which the plurality of contents information is arranged can be implemented in a C-shape, an S-shape, a W-shape, an I-shape, an E-shape, a V-shape, or the like in a variety of ways.

Alternatively, the form in which the plurality of contents information is arranged can be provided in a closed-loop shape, for example, a polygon-shape including a wheel-shape, a D-shape and a triangle or the like. Furthermore, the plurality of contents information can be displayed in perspective. For example, the certain form can be provided as a cylindrical or the like. At this time, in the case where the UI generating unit 37 supports a 2D process, each display position of the contents information can be calculated with two-dimensional coordinates. Moreover, in the case where the UI generating unit 37 supports a 3D process, each display position of the contents information can be calculated with three-dimensional coordinates. In the case where the UI generating unit 37 supports the 2D process only, the plurality of contents information can be sufficiently rendered in perspective. In the case where the UI generating unit 37 supports the 3D process, the plurality of contents information can be more vividly rendered in perspective.

Further, the controller 70 can display the contents information as faces, i.e., as a group of planes or panels. When the search function is selected, the controller 70 can control the signal processing unit 30 such that each face (i.e., plane or panel) is displayed in perspective according to the display position on the display unit 40. In other words, when the face is a square having four sides, the length of each side can be changed in order to give the face perspective (refer to Figure 3B).

For example, the controller 70 can arrange the image information corresponding to the channel numbers of 1 through 100 in a wheel form, and adjust a region of the wheel form to be displayed on the display unit 40 according to the search speed.

As the search speed increases, the controller 70 can increase the region of the certain form to be displayed on the display unit 40, in which each of the contents information is sequentially arranged with respect to the position of the contents information corresponding to the retrieved channel. Further, when the search speed is greater than a threshold speed, the controller 70 can control the certain form in which each of the contents information corresponding to all tunable channels in the tuner 10 has been sequentially arranged is fully displayed in a region of the display unit 40. A region of the wheel form to be displayed on the display unit 40 increases corresponding to the search speed, so that the controller 70 preferably decreases each display size of the contents information and the display size of the whole wheel form.

In other words, when the contents information is arranged as the wheel form, each of the contents information corresponds to each channel, so that 100 pieces of contents information can be sequentially arranged with a wheel form. Further, for 100 pieces of contents information, the region of the wheel form to be displayed on the display unit 40 in which the contents information is arranged can be adjusted according to the search speed. In other words, based on the search speed, the controller 70 adjusts the region of the wheel form to be displayed on the display unit 40 in which the contents information is arranged. Accordingly, based on the sequence of arranging the contents information in the wheel form, the number and the region of the contents information to be displayed on the display unit 40 can be adjusted.

Referring to Figures 3B through 3D, the controller 70 controls the contents information corresponding to the tunable channel in the tuner 10 to be sequentially arranged in the wheel form. Further, the controller 70 controls a portion of the wheel form to be displayed on the display unit 40 in consideration of the search speed and the arranged form. Accordingly, the user can easily see the information about how many channels are tuned, or the like.

The controller 70 can sequentially retrieve the contents information corresponding to the respective channels, and control the UI generating unit 37 to generate an interface screen in which the retrieved contents information 51a is displayed distinguishably from the other contents information.

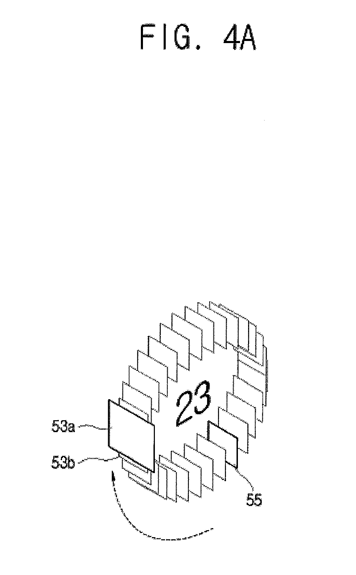

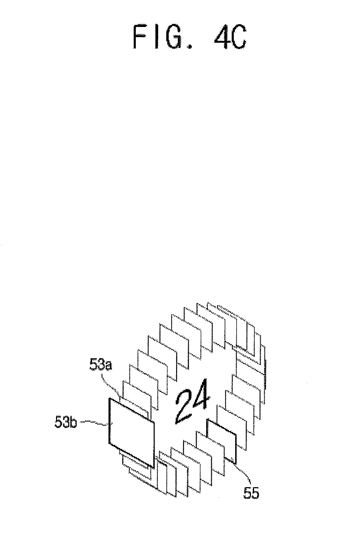

In other words, the retrieved contents information 51a can be differentiated in display size, brightness, shading, etc. or differently displayed according to an edge feature or the like from the other contents information. Moreover, the controller 70 can control the signal processing unit 30 such that the whole face is displayed on the display unit 40 for the sequentially retrieved contents information 51a, and a portion of the face is displayed on the display unit 40 for the remainder of the retrieved contents information. The controller 70 can control the remainder of the retrieved contents information to be overlapped with the other contents information (refer to Figures 4A through 4C).

Further, the controller 70 can control the retrieved contents information 51a to be displayed in a certain position of the above-mentioned wheel form, in other words, in a certain region for a plurality of contents information which is sequentially arranged. The certain position and the certain region may each be preset.

Also the controller 70 may control the signal processing unit 30 such that the initially retrieved contents information 55 is displayed distinguishably from the other contents information. Here, the initially retrieved contents information 55 denotes the contents information corresponding to the firstly retrieved channel when the user starts the search of the contents information. For example, when the user starts a channel search while watching an image corresponding to a channel number of 10, it is advantageous to be programmed in such a manner that the contents information corresponding to the channel number of 10 or 11 becomes the initially retrieved contents information 55, but it may not be restricted to this. The contents information can be differentiated in display size, brightness, shading, or the like, or differently displayed according to an edge feature or the like from the other contents information.

Meanwhile, the controller 70 can control the signal processing unit 30 in such a manner that channel information for the channel as well as the contents information is displayed on the display unit 40. In other words, the controller 70 can control the channel information to be displayed in a region other than the region where the contents information is displayed on the display unit 40. Here, it is advantageous if the channel information includes at least one of a channel number, a channel name, and a title of a broadcasting program.

According to another exemplary embodiment of the present invention, when the search function is selected through the user selection unit 80, the controller 70 can control the signal processing unit 30 such that the plurality of contents information corresponding to the respective tunable channel in the tuner 10 is sequentially arranged to be displayed on the display unit 40, and the contents information corresponding to the retrieved channel is displayed distinguishably from the other contents information. In other words, when the channel search function is selected, the controller 70 controls the plurality of contents information corresponding to each channel to be arranged in a certain form, and the certain form to be fully displayed on the display unit 40 regardless of the search speed. The certain form may be predetermined. For example, when the channel search function is selected, the controller 70 can arrange the contents information corresponding to the channel regardless of the search speed, as illustrated in Figure 3D.

The controller 70 can control the signal processing unit 30 in such a manner that the plurality of contents information is sequentially arranged as a closed loop shape. The closed loop shape may have a shape as illustrated in Figure 3D. Moreover, the controller 70 may control the signal processor in such a manner that the channel information corresponding to the retrieved channel is displayed in a region other than the region where the contents information is displayed on the display unit.

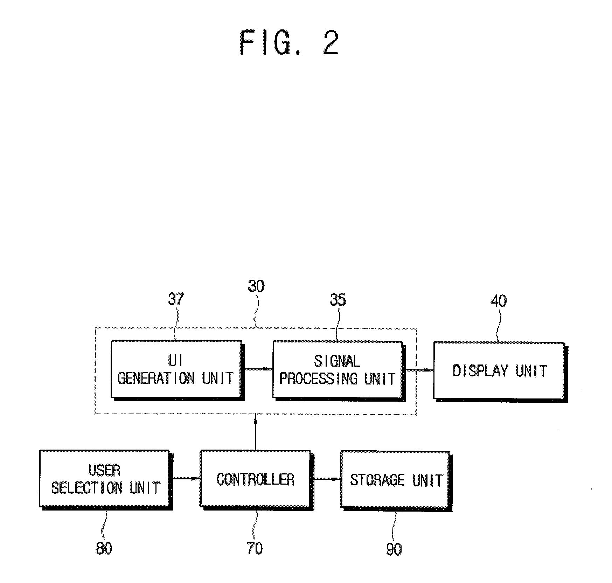

Figure 2 is a view illustrating a display apparatus according to a second exemplary embodiment of the present invention, which is not a television.

As illustrated in Figure 2, a display apparatus according to the second exemplary embodiment of the present invention includes a display unit 40, a signal processing unit 30, a user selection unit 80 for selecting a search function for the search of the contents information and selecting the search speed of the contents information, and a controller 70 for controlling these units.

The user selection unit 80 can include direction and arrow keys of a keyboard, or photo search keys of a digital camera, or the like.

Further, a display apparatus according to the second exemplary embodiment of the present invention may include a storage unit 90 for storing a plurality of data to be retrieved. The plurality of data may be file data, and may include image files, moving picture files, document files, etc.

According to an exemplary embodiment of the present invention, when a search function is selected through the user selection unit 80 and the contents information is retrieved at the search speed greater than a threshold speed, the controller 70 can adjust the number of contents information displayed on the display unit 40 based on the search speed. The search function and the threshold speed may each be predetermined. Moreover, the controller 70 can also adjust the display size and the display position of the contents information. The contents information corresponding to each data can be sequentially arranged in a certain form, and the arranged form may be a closed-loop shape. The certain form may be predetermined. Further, the contents information can be arranged in perspective, and each of the contents information can be displayed inperspective according to the display position on the display unit 40.

For example, a plurality of photo files (N.001~N.100) may be stored in the storage unit 90, and the contents information that a user tries to search may correspond to a photo file of the plurality of photo files.

For example, when the user continuously presses the up key among the direction keys of the keyboard, the contents information corresponding to the N.001 file among the photo files will be retrieved, and the contents information corresponding to the N.002, N.003, ... N.099, and N.100 will be sequentially retrieved, and when the up key is still selected, the contents information from the N.001 can be retrieved again.

When the user selects the down key for the first time, only the contents information corresponding to the N.001 is displayed on the display unit 40, and sequentially, as the search speed increases, the contents information corresponding to the other photo files can be displayed on the display unit 40.

The controller 70 can sequentially arrange the contents information corresponding the files from N.001 to N.100. The contents information can be arranged in a perspective wheel form. Further, the controller 70 can increase the scope to be displayed on the display unit 40 with respect to the location of the contents information 51a retrieved in the wheel form as the search speed increases. Furthermore, since the region displayed on the display unit as the wheel form increases, it is advantageous if each display size of the contents information and the display size of the whole wheel form is decreased. Accordingly, it is advantageous if each display size of the contents information and the display size of the whole wheel form are changed.

In a display apparatus according to the second embodiment of the present invention, when the search function is selected through the user selection unit 80, the controller 70 can control the signal processing unit 30 in such a manner that the plurality of contents information corresponding to data stored in the storage unit 90 is sequentially arranged to be displayed on the display unit 40. It is advantageous that the plurality of contents information is sequentially arranged in perspective. Moreover, the controller 70 can control in such a manner that the retrieved contents information corresponding to the retrieved data is displayed distinguishably from the other contents information. In other words, when the channel search function is selected, the controller 70 controls in such a manner that the plurality of contents information is arranged in a certain form and the certain form is fully displayed on the display unit 40 regardless of the search speed. The certain form may be predetermined.

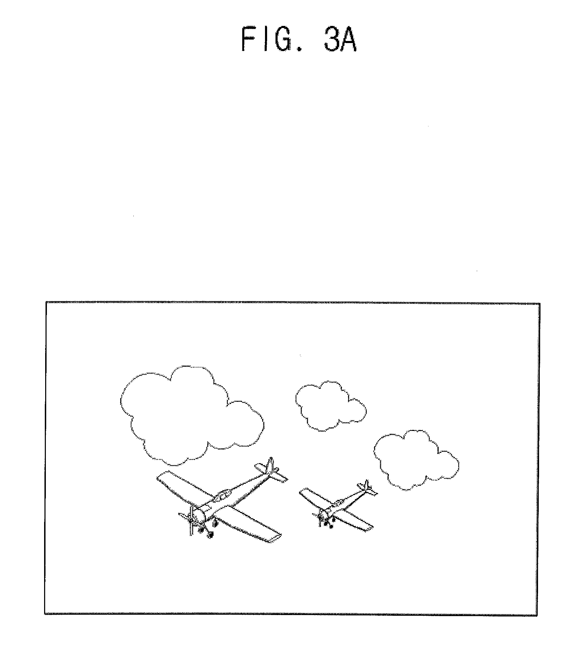

Figures 3A through 5 illustrate that the display apparatus according to an exemplary embodiment of the present invention is a television and the contents information is provided for corresponding to the channel. Figures 3A through 3D are views illustrating that change in the screens which are displayed on the display unit depending on the change of the search speed.

Figure 3A is a screen which is displayed on the display unit 40 when the user watches an image corresponding to a certain channel before the search function is selected through the user selection unit 80. The certain channel may be predetermined.

Figures 3B through 3D illustrate screens which are sequentially changed as the search speed of the contents information is getting faster.

In other words, Figure 3B illustrates the screen which is displayed on the display unit 40 when the search function is selected. When the search function is selected by a user while watching a channel of 62 (refer to Figure 3A), the contents information corresponding to the channel of 62 can be displayed on a portion of the display unit 40. The screen displayed on the display unit 40 is a portion of the whole contents information having a perspective wheel shape. Therefore, in addition to the contents information 51a corresponding to the channel of 62, contents information 51c corresponding to a channel of 61 and contents information 51b corresponding to a channel of 63 can be displayed sequentially in the screen.

When the search function is selected by a user through the user selection unit 80 while watching the channel of 62, it may be programmed as described above that the retrieved contents information 51a corresponds to the channel of 62, but it may be programmed that the retrieved contents information 51a corresponds to the channel of 61, the channel of 63, or another channel, which may be preset.

Further, after the search function is selected, as the search speed gets faster, a portion of the whole contents information displayed as a wheel shape on the display unit 40 gradually increases in the screen displayed on the display unit 40 (refer to Figures 3C and 3D), and when the search speed is faster than a threshold speed, the wheel form is fully displayed on the display unit 40 as illustrated in Figure 3D. As described above, while a portion of the wheel shape to be displayed on the display unit 40 gradually increases, each size of the contents information comprising the wheel shape gradually becomes smaller and smaller, and the display position is changed on the display unit 40.

As illustrated in Figure 3B, when the search function is selected, even one of the contents information can be adjusted in the length of each side thereof to be displayed on the display in perspective. Moreover, as illustrated in Figures 3B and 3D, each of the contents information and the form in which the contents information is arranged can be also displayed in perspective.

In addition to the contents information, information about the channel can be displayed on a screen displayed on the display unit 40. In other words, the channel number can be displayed on a screen as the retrieved contents information 51a or the like. For example, referring to Figure 3B, the channel number corresponding to the contents information which is currently retrieved by the user is of channel number '62', and it is an image received from an 'SBS' broadcasting station.

Figures 4A through 4C are views illustrating the screens in which the contents information is sequentially retrieved after the search function is selected, and thus the retrieved contents information changes sequentially. In the above-mentioned exemplary embodiment, the reference numeral of the retrieved contents information is 51a. However, as illustrated in Figures 4A through 4C, since the retrieved contents information is changed, for the sake of convenience, it is illustrated that the reference numeral of the contents information corresponding to '51a' is changed from '53a' to '53b'.

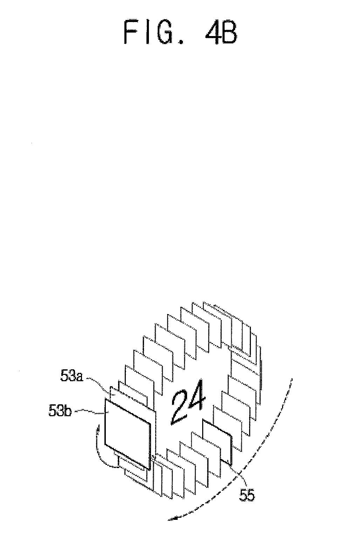

In Figure 4A, for example, a screen in which the contents information 53a corresponding to a channel of 23 has been retrieved is illustrated. Further, when the channel up key or the like is selected through the user selection unit 80, the contents information 53a corresponding to the channel 23 and the contents information 53b corresponding to the channel 24 are moved to their upper positions respectively. Accordingly, all of the contents information including the contents information 53a corresponding to the channel 23 and the contents information 53b corresponding to the channel of 24 are sequentially moved from the arranged position to be displayed (refer to Figure 4B). By this, the screen 53b corresponding to the channel of 24 moves to the position where the screen 53a corresponding to the channel of 23 was located previously as illustrated in Figure 4A (refer to Figure 4C). Therefore, the retrieved contents information can be located in a fixed position in the position where each of the contents information is arranged.

The retrieved contents information (refer to '51a' of Figures 3B through 3D, '53a' of Figure 4A, and '53b' of Figures 4B and 4C) can be provided with a larger display size, a distinguished framing border or the like in a different way from the other contents information so as to be displayed distinguishably from each other as described above. Moreover, the initially retrieved contents information 55 can be also displayed distinguishably from the other contents information. By this, the position of the initially retrieved contents information 55 can be compared with the currently retrieved contents information 53a and 53b. Therefore, a user can see the position of the currently retrieved contents information 53a and 53b retrieved, and also see how many times the search is performed.

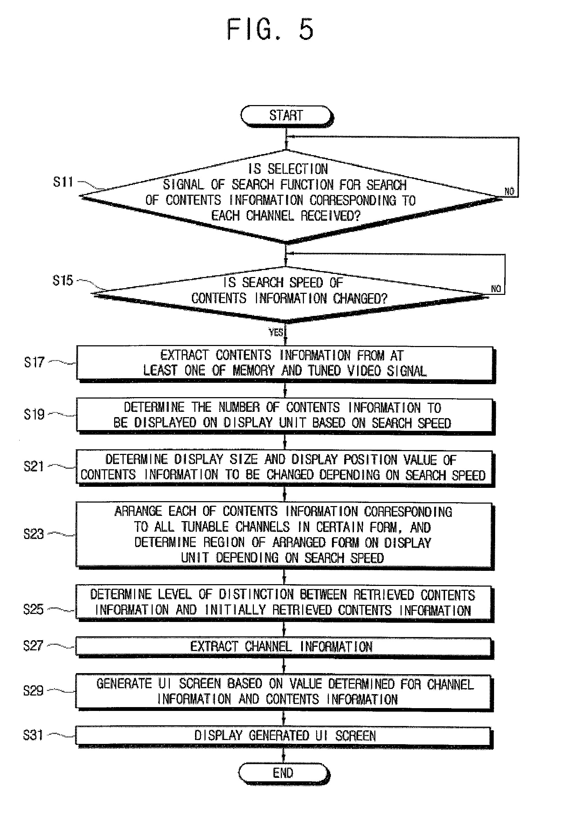

As illustrated in Figure 5, in the display apparatus according to an exemplary embodiment of the present invention, when a search function for searching the contents information corresponding to each channel is selected through the user selection unit 80 (S11), the controller 70 can determine the search speed of the contents information (S15). The controller 70 extracts at least one of the contents information based on a tuned video signal and the contents information stored in the storage unit 90 (S17). Furthermore, based on the search speed, the controller 70 determines a number of the contents information to be displayed on the display unit 40 based on the search speed (S19), and determines the display size and the display position value on the screen of the display unit 40 for the contents information to be changed based on the search speed (S21). Further, the controller 70 can sequentially arrange all the contents information to be retrieved, for example, the contents information corresponding to all tunable channels in the tuner 10 in a certain form, and determines a region of the certain form to be displayed on the screen of the display unit 40 based on the search speed (S23). The certain form may be predetermined. After performing the operation of S23, the controller 70 determines the number of contents information to be displayed on the display unit 40 in consideration of a region for the predetermined form to be displayed on a screen of the display unit 40 (not shown), and determines the display size and display position value of the contents information to be displayed on the screen (not shown).

Furthermore, in order to display the currently retrieved contents information and the initially retrieved contents information 55 distinguishably from the other contents information, the controller 70 can determine a level of distinction (S25) between the initially retrieved contents information and the other contents information and control the UI generating unit 37 based on this level. At this time, the level of distinction was described in the above, and repetitive description will be avoided.

The controller 70 can extract channel information corresponding to the retrieved channel from the storage unit 90 or from broadcast signal being tuned through the tuner 10 (S27), and control the UI generating unit 37 to generate an interface screen having the information about the retrieved data (S29).

In Figure 5, the order of the operations S17 through S27 can be changed.

The controller 70 outputs data to the UI generating unit 37, thereby controlling the UI generating unit 37 to generate an interface screen (S29). The data contains information about the number of contents information, the display size and the display position of the contents information, the region of a certain form to be displayed on the screen, the level of distinction to distinguish the currently retrieved contents information and the initially retrieved contents information 55 from the other contents information, and the retrieved channel information. Further, the controller 70 controls an interface screen generated by the UI generating unit 37 to be displayed on the display unit 40 (S31).

Further, whenever the search speed or the retrieved channel is changed, the controller 70 can sequentially change the interface screen displayed on the display unit.

As described above, a display apparatus according to an exemplary embodiment of the present invention may be a television, but it can be also applied to a computer or the like for the search of file data. Moreover, a display apparatus according to an exemplary embodiment of the present invention can be applied to a camcorder, a digital camera, an MP3 player and a portable multimedia player (PMP), or the like, for the search of moving picture files, photo files, music files, etc.

As described above, according to an exemplary embodiment of the present invention, there are provided a display apparatus and a search method, in which an improved screen displayed on a display unit when the user searches contents information.

As stated above, in a display apparatus according to an exemplary embodiment of the present invention, the number of contents information displayed on a display unit will be changed based on the search speed of the contents information, whereby the user can easily recognize the search level and speed.

According to an exemplary embodiment of the present invention, if the search speed is greater than a threshold speed or a search function is selected, all of the contents information to be retrieved will be displayed on a display unit. Further, the display position of the contents information or the like will be changed based on the search speed, whereby a user can easily recognize the search speed. Also, the screen state will be continually changed in the course of search, whereby a user will not feel monotony in searching.

Moreover, in a display apparatus according to an exemplary embodiment of the present invention, when a screen is processed in 3D or 2D and displayed in perspective, a user can recognize contents information more clearly and more easily through the change of coordinate, size, color, or the like for the contents information to be retrieved.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a user selection unit (80) which adjusts a search speed of a plurality of contents information (51a) and a search function for searching the plurality of contents information (51a);
a signal processor unit (30) which processes a signal to be displayed as an image on a display unit (40); and
a controller (70) which controls the signal processor unit (30) such that when the search function is selected, at least one of the plurality of contents information (51a) is displayed in a region of the display unit (40), and a number of contents information displayed on the display unit (40) is adjusted based on the search speed.

2. The display apparatus according to claim 1, wherein the controller (70) controls the signal processor unit (30) such that at least one of a display position and a display size of each of the plurality of contents information (51a) is adjusted based on the search speed.

3. The display apparatus according to claim 2, wherein the controller (70) controls the signal processor unit (30) such that the number of the contents information displayed on the display unit (40) is increased and the display size of the contents information is reduced as the search speed increases.

4. The display apparatus according to claim 1, 2 or 3, wherein the controller (70) controls the signal processor unit (30) such that the plurality of contents information (51a) is sequentially arranged in a predetermined form.

5. The display apparatus according to claim 4, wherein as the search speed increases, the controller (70) increases the number of sequentially arranged contents information to be displayed on the display unit (40) based on a location of the retrieved contents information.

6. The display apparatus according to claim 5, wherein the controller (70) controls the signal processor unit (30) such that the predetermined form is fully displayed on the display unit (40) when the search speed is greater than a threshold speed.

7. The display apparatus according to claim 6, wherein the controller (70) sequentially arranges the plurality of contents information (51a) in a closed-loop shape.

8. The display apparatus according to claim 7, wherein the controller (70) controls the signal processor unit (30) such that the plurality of sequentially arranged contents information is displayed in perspective.

9. The display apparatus according to any preceding claim, wherein the contents information is displayed as faces, and the controller (70) controls the signal processor unit (30) such that the face is displayed in perspective depending on a location on the display unit (40) when the search function is selected.

10. The display apparatus according to any preceding claim, wherein the contents information is sequentially retrieved through the operation of the user selection unit (80), and the controller (70) controls the signal processor unit (30) such that the sequentially retrieved contents information is displayed distinguishably from other contents information.

11. The display apparatus according to claim 10, wherein the controller (70) controls the signal processor unit (30) such that the sequentially retrieved contents information is positioned in a region designated for the plurality of sequentially arranged contents information.

12. The display apparatus according to claim 11, wherein the controller (70) controls the signal processor unit (30) such that a remainder of the retrieved contents information is displayed to be overlapped with the other contents information.

13. The display apparatus according to claim 12, wherein the controller (70) controls the signal processor unit (30) such that initially retrieved contents information is displayed distinguishably from the other contents information.

14. The display apparatus according to any preceding claim, wherein the controller (70) determines that the search function is selected when the search speed is greater than a reference speed.

15. The display apparatus according to claim 14, further comprising a tuner (10) to be tuned to a broadcast signal corresponding to a channel of a plurality of channels, wherein the contents information comprises image information based on the broadcast signal corresponding to each channel of the plurality of channels.

16. The display apparatus according to claim 15, wherein the image information comprises a basic image corresponding to each channel of the plurality of channels through which the broadcast signal is received, and the display apparatus further comprises a storage unit (90) for storing the basic image.

17. The display apparatus according to claim 16, wherein the retrieved image information further comprises a tuning image corresponding to a video signal being selected in the tuner (10).

18. The display apparatus according to claim 17, wherein the signal processor unit (30) processes channel information corresponding to a channel to be displayed on the display unit (40), and the controller (70) controls the signal processor unit (30) such that the channel information corresponding to the retrieved channel is displayed in a region other than the region where the image information is displayed on the display unit (40).

19. The display apparatus according to claim 14, further comprising a storage unit (90) for storing file data, wherein the controller (70) controls the signal processor unit (30) such that the contents information based on the file data stored in the storage unit (90) is displayed on the display unit (40).

20. A search method comprising:
receiving a selection signal for selecting a search function for searching a plurality of contents information (51a) ;
adjusting a search speed of the contents information;
displaying at least one of the contents information when the search function is selected; and
adjusting a number of the displayed contents information based on the search speed.

21. The search method according to claim 20, further comprising adjusting at least one of a display position and a display size of the contents information depending on the search speed.

22. The search method according to claim 21, wherein the adjusting the number of the displayed contents information comprises increasing the number of the displayed contents information as the search speed increases, and the adjusting the display size comprises adjusting the display size of the contents information to be smaller as the search speed increases.

23. The search method according to claim 20, 21 or 22, further comprising sequentially arranging the plurality of contents information (51a) in a certain form.

24. The search method according to claim 23, wherein the sequentially arranging the plurality of contents information (51a) comprises increasing a number of sequentially arranged contents information which will be displayed with respect to a location of retrieved contents information as the search speed increases.

25. The search method according to claim 24, wherein the sequentially arranging the plurality of contents information (51a) comprises:
displaying a whole of the certain form when the search speed is greater than a threshold speed.

26. The search method according to claim 25, wherein the sequentially arranging the plurality of contents information (51a) in a certain form comprises sequentially arranging a plurality of contents information (51a) in a closed-loop shape.

27. The search method according to claim 26, wherein the sequentially arranging the plurality of contents information (51a) in a certain form comprises displaying the plurality of sequentially arranged contents information in perspective.

28. The search method according to any of claims 20 to 27, wherein the selecting the search function comprises sequentially searching the contents information.

29. The search method according to claim 28, wherein the search method further comprises displaying retrieved contents information to be displayed distinguishably from other contents information.

30. The search method according to claim 29, wherein the displaying the retrieved contents information distinguishably comprises displaying the retrieved contents information to be positioned in a certain region of the plurality of sequentially arranged contents information.

31. The search method according to claim 30, wherein the displaying the retrieved contents information distinguishably comprises displaying a remainder of the retrieved contents information overlapped with the other contents information, respectively.

32. The search method according to any of claims 20 to 31, wherein the selecting the search function comprises selecting the search function when the search speed is greater than a reference speed.

33. The search method according to claim 32, further comprising tuning the broadcast signal corresponding to a channel of a plurality of channels, wherein the contents information comprises image information based on the broadcast signal corresponding to each channel of the plurality of channels.

34. The search method according to claim 33, wherein the image information comprises a basic image corresponding to each channel of which the broadcast signal is received, and the search method comprises storing the basic image.

35. The search method according to claim 34, further comprising displaying the channel information corresponding to a retrieved channel in a region other than a region where the image information is displayed.

36. The search method according to claim 32, further comprising storing file data, wherein the contents information comprises information about the stored file data.

37. A display apparatus, comprising:
a channel selection unit (80) which selects a channel search;
a tuner (10) which is tuned to a broadcast signal corresponding to each channel of a plurality of channels;
a signal processor unit (30) which processes a signal to be displayed as an image on a display unit (40); and
a controller (70) which controls the signal processor unit (30) such that a plurality of contents information (51a) corresponding to each tunable channel of the plurality of channels in the tuner (10) is sequentially arranged and displayed on the display unit (40) when the channel search is selected, and the contents information corresponding to a retrieved channel is displayed distinguishably from other contents information.

38. The display apparatus according to claim 37, wherein the controller (70) controls the signal processor unit (30) such that the plurality of contents information (51a) is sequentially arranged in a closed-loop shape.

39. The display apparatus according to claim 38, wherein the controller (70) controls the signal processor unit (30) such that the channel information corresponding to the retrieved channel is displayed in a region other than a region where the contents information is displayed.
